# EUROPÄISCHE PATENTSCHRIFT

(11) **EP 3 401 140 B1**
(45) Veröffentlichungstag und Bekanntmachung des Hinweises auf die Patenterteilung: **09.10.2019**
(21) Anmeldenummer: 17203058.7
(22) Anmeldetag: 22.11.2017
(51) Int. Cl.: B60J 5/06, F16D 1/10, B60J 7/08

(54) **ANSCHLUSSADAPTER ZUM ANSCHLUSS EINER SPANNVORRICHTUNG AN EINE WICKELWELLE EINES WICKELELEMENTS, INSBESONDERE EINER PLANE**
ADAPTER TO CONNECT A TENSIONING DEVICE TO A TIGHTING ROD, ESPECIALLY TO ONE OF A TARPAULIN
ADAPTATEUR POUR CONNECTER UN DISPOSITIF DE TENSION À UNE TIGE, NOTAMMENT À UNE D'UNE BÂCHE

(30) Priorität: 08.05.2017 DE 202017102727 U
(43) Veröffentlichungstag der Anmeldung: 14.11.2018
(73) Patentinhaber: Franz Miederhoff oHG, 59846 Sundern (DE)
(72) Erfinder: Miederhoff, Dr. Thorsten, 59846 Sundern (DE)
(74) Vertreter: Patentanwälte Dörner & Kötter PartG mbB

(56) Entgegenhaltungen:
- EP-A1- 2 108 483
- EP-B2- 1 378 385
- WO-A1-2008/142715
- DE-U1-202008 012 726

## Beschreibung

Die vorliegende Erfindung betrifft einen Anschlussadapter zum Anschluss einer Spannvorrichtung an eine Wickelwelle eines Wickelelements, insbesondere einer Plane, nach dem Oberbegriff des Anspruchs 1.

Ladeflächen von Lastkraftwagen und Anhängern werden bekanntermaßen mit Hilfe seitlich verschiebbarer Planen, die häufig auch als Schiebeplanen bezeichnet werden, vor äußeren Einflüssen geschützt. Diese seitlich verschiebbaren Planen weisen einen Keder auf, mittels dessen sie an einer sich in Hochrichtung erstreckenden Wickelwelle angebracht werden können, um mit Hilfe der Spannvorrichtung ein Spannen beziehungsweise Entspannen der Plane - insbesondere in horizontaler Richtung - zu ermöglichen. Um das Spannen beziehungsweise Entspannen der Plane zu erleichtern, wird eine Spannvorrichtung verwendet, die zum Beispiel als Spannratsche oder Spannkurbel ausgebildet sein kann und mittels eines Anschlussadapters mit der Wickelwelle verbunden werden kann. Über den Anschlussadapter kann somit ein Drehmoment von der Spannvorrichtung auf die Wickelwelle übertragen werden. In diesem Zusammenhang ist es wünschenswert, die seitlich verschiebbare Plane in ihrer Gebrauchsstellung, in der sie die Ladefläche des Lastkraftwagens beziehungsweise Anhänger schützt, möglichst straff zu spannen, um dadurch während des Fahrbetriebs den Luftwiderstand zu verringern und so den Kraftstoffverbrauch zu senken.

Anschlussadapter, welche die Spannvorrichtung mechanisch mit der Wickelwelle koppeln, sind aus dem Stand der Technik in unterschiedlichen Ausführungsformen bereits bekannt. Die EP 1 378 385 B2 offenbart zum Beispiel einen Anschlussadapter, bei dem ein Eingriffselement innerhalb eines Hohlraums eines Anschlussabschnitts zum Anschluss der Wickelwelle als schlüssellochartiges Vollprofil ausgebildet ist, wobei ein kreisrunder Profilabschnitt mittels eines trapezförmigen Profilabschnitts mit der Innenseite der Wandung des Hohlraums des Anschlussabschnitts verbunden ist. In diesen Hohlraum wird bei der Montage ein Ende der Wickelwelle eingesetzt.

Die vorliegende Erfindung macht es sich zur Aufgabe, einen alternativ ausgestalteten Anschlussadapter zum Anschluss einer Spannvorrichtung an eine Wickelwelle eines Wickelelements, insbesondere einer Plane, zu schaffen, der eine sichere mechanische Verbindung der Spannvorrichtung mit der Wickelwelle zur Verfügung stellt und kostengünstig hergestellt werden kann.

Die Lösung dieser Aufgabe liefert ein Anschlussadapter der eingangs genannten Art mit den Merkmalen des kennzeichnenden Teils des Anspruchs 1. Die Unteransprüche betreffen vorteilhafte Weiterbildungen der Erfindung.

Ein erfindungsgemäßer Anschlussadapter zeichnet sich dadurch aus, dass das Eingriffselement
- zylinderförmig ausgebildet ist,
- und durch einen Luftspalt von der umlaufenden Wandung des Hohlraums beabstandet angeordnet ist.

Der erfindungsgemäße Anschlussadapter ermöglicht eine sichere, drehfeste mechanische Verbindung der Spannvorrichtung mit der Wickelwelle, die auch hohen Torsionsbeanspruchungen standhält, ohne dass - wie im Stand der Technik - das Eingriffselement mit einer Innenseite der umlaufenden Wandung des Hohlraums des zweiten Anschlussabschnitts verbunden ist. Der Luftspalt bildet somit einen Zwischenraum zwischen dem Eingriffselement und der Innenseite der umlaufenden Wandung des Hohlraums des zweiten Anschlussabschnitts. Der Verzicht auf einen Verbindungssteg zwischen dem Eingriffselement und der Innenseite der Wandung führt in vorteilhafter Weise zu einer Materialersparnis, so dass die Kosten für die Herstellung des Anschlussadapters verringert werden können.

In einer bevorzugten Ausführungsform wird vorgeschlagen, dass an einer Innenseite der Wandung des Hohlraums des zweiten Anschlussabschnitts zumindest eine Halterippe ausgebildet ist, die sich in Längsrichtung des Hohlraums erstreckt und mit der Wickelwelle verpressbar ist. Durch diese Maßnahme wird der Kraftschluss zwischen der Wickelwelle und dem zweiten Anschlussabschnitt verbessert. Vorzugsweise kann sich die Halterippe in Längsrichtung über die gesamte Höhe des Hohlraums bis zum Hohlraumgrund des zweiten Anschlussabschnitts erstrecken, um dadurch die Verpressung weiter zu optimieren.

In einer vorteilhaften Weiterbildung besteht die Möglichkeit, dass an einer Innenseite der Wandung des Hohlraums des zweiten Anschlussabschnitts mehrere, in Umfangsrichtung voneinander beabstandete Halterippen ausgebildet sind, die sich in Längsrichtung des Hohlraums erstrecken und mit der Wickelwelle verpressbar sind. Dadurch kann der Kraftschluss zwischen der Wickelwelle und dem zweiten Anschlussabschnitt noch weiter verbessert werden. Zur Optimierung der Verpressung können sich die Halterippen in Längsrichtung über die gesamte Höhe des Hohlraums bis zum Hohlraumgrund des zweiten Anschlussabschnitts erstrecken.

Der Anschlussadapter und die Wickelwelle, die bei der Herstellung insbesondere hydraulisch miteinander verpresst werden können, können als herstellerseitig vormontierte Einheit in den Verkehr gebracht werden. Alternativ kann der Anschlussadapter auch als Einzelteil veräußert werden und dann kundenseitig mit der zugehörigen Wickelwelle verbunden werden. Da erfahrungsgemäß nicht jeder Kunde die technischen Möglichkeiten hat, um den Anschlussadapter - vorzugsweise hydraulisch - in optimaler Weise mit der zugehörigen Wickelwelle zu verpressen, wird in einer vorteilhaften Ausführungsform vorgeschlagen, dass in der Wandung des Hohlraums des zweiten Anschlussabschnitts zumindest eine Bohrung ausgebildet ist, in die ein Sicherungsniet zur Sicherung der Wickelwelle innerhalb des Hohlraums einsetzbar ist. Mittels des Sicherungsniets, der mit der Wickelwelle vernietet wird, wird somit eine zusätzliche Möglichkeit geschaffen, die Wickelwelle nach dem Einsetzen in den Hohlraum des zweiten Anschlussabschnitts zu sichern. Eine Nietverbindung schafft ebenfalls eine sichere drehfeste Verbindung der Wickelwelle mit dem zweiten Anschlussabschnitt des Anschlussadapters.

Im Stand der Technik werden die Anschlussadapter häufig aus Edelstahl hergestellt. In einer besonders bevorzugten Ausführungsform vorgeschlagen, dass der Anschlussadapter aus einer Aluminiumlegierung hergestellt ist. Wenn die Wickelwelle ebenfalls aus einer Aluminiumlegierung hergestellt ist, ergibt sich in vorteilhafter Weise eine homogene Materialkombination. Beispielsweise kann der Anschlussadapter aus einer hochfesten Aluminiumlegierung hergestellt werden, die unter der Bezeichnung EN AW-7075 (Kurzname nach EN: AIZn5,5MgCu) erhältlich ist. Ein Vorteil, der sich durch die Verwendung einer Aluminiumlegierung zur Herstellung des Anschlussadapters ergibt, besteht in einer deutlich geringeren Masse im Vergleich zu einem aus Edelstahl hergestellten Anschlussadapter. Denn die zur Herstellung des Anschlussadapters verwendbaren Aluminiumlegierungen weisen typischerweise eine Dichte im Bereich von etwa 2,8 g/cm³ auf, wohingegen Edelstahl eine Dichte von etwa 8,0 g/cm³ besitzt. Zudem sind Aluminiumlegierungen preisgünstiger als Edelstahl, so dass die Kosten für die Herstellung des Anschlussadapters verringert werden können.

Grundsätzlich besteht die Möglichkeit, dass der insbesondere aus einer Aluminiumlegierung hergestellte Anschlussadapter ein Gussteil ist. Dabei stellt sich jedoch häufig das Problem der Lunkerbildungen, die zu einer Verschlechterung der mechanischen Eigenschaften des Anschlussadapters führen. In einer vorteilhaften Ausführungsform wird daher vorgeschlagen, dass der Anschlussadapter durch einen Hochdruck-Warmumformungsprozess hergestellt ist. Durch diesen Hochdruck-Warmumformungsprozess ergibt sich ein homogenes metallisches Gefüge, so dass unerwünschte Lunkerbildungen in vorteilhafter Weise vermieden werden können. Daraus resultiert selbst bei starken Torsionsbelastungen eine wesentlich geringere Bruchneigung des Anschlussadapters. Vorzugsweise kann der Anschlussadapter durch Gesenkschmieden hergestellt sein.

Um die mechanischen Eigenschaften des Anschlussadapters weiter zu verbessern, wird in einer vorteilhaften Ausführungsform vorgeschlagen, dass der Anschlussadapter durch thermische Behandlung gehärtet ist. Insbesondere kann der aus einer Aluminiumlegierung hergestellte Anschlussadapter zu diesem Zweck einer so genannten T6-Wärmebehandlung unterzogen werden, die aus folgenden Schritten besteht: Lösungsglühen mit anschließendem Abschrecken und nachfolgendem Warmauslagern zur Ausscheidungshärtung. Es hat sich gezeigt, dass der Anschlussadapter trotz des auf den Warmumformungsprozess folgenden Härtungsprozesses anschließend noch sehr gut mechanisch bearbeitet werden kann. So lässt sich zum Beispiel in die Wandung des Hohlraums des zweiten Anschlussabschnitts des aus einer Aluminiumlegierung hergestellten Anschlussadapters sehr einfach die oben bereits erwähnte Bohrung zur Aufnahme eines Sicherungsniets einbringen. Dieses ist bei einem Anschlussadapter, der aus Edelstahl hergestellt ist, erheblich schwieriger.

Gemäß einem weiteren Aspekt betrifft die vorliegende Erfindung eine Anordnung, umfassend eine Wickelwelle eines Wickelelements, insbesondere einer Plane, und einen Anschlussadapter zum Anschluss einer Spannvorrichtung an die Wickelwelle, wobei der Anschlussadapter mit der Wickelwelle verbunden ist. Die erfindungsgemäße Anordnung zeichnet sich dadurch aus, dass der Anschlussadapter nach einem der Ansprüche 1 bis 10 ausgeführt ist.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen:
- Fig. 1: eine perspektivische Ansicht eines Anschlussadapters zum Anschluss einer Spannvorrichtung an eine Wickelwelle eines Wickelelements, insbesondere einer Plane,
- Fig. 2: eine Seitenansicht des Anschlussadapters gemäß Fig. 1,
- Fig. 3: einen Schnitt entlang einer Linie A-A in Fig. 2,
- Fig. 4: eine Draufsicht auf einen ersten Anschlussabschnitt des Anschlussadapters,
- Fig. 5: eine Draufsicht auf einen zweiten Anschlussabschnitt des Anschlussadapters,
- Fig. 6: eine vergrößerte Ansicht, die Einzelheiten einer Halterippe innerhalb eines Hohlraums des zweiten Anschlussabschnitts veranschaulicht.

Ein Anschlussadapter 1 zum Anschluss einer Spannvorrichtung an eine Wickelwelle eines Wickelelements, insbesondere einer Plane eines Lastkraftwagens oder eines Anhängers, umfasst einen Grundkörper 2, der einen ersten Anschlussabschnitt 3 zum Anschluss der Spannvorrichtung, sowie einen zweiten Anschlussabschnitt 4, der dem ersten Anschlussabschnitt 3 gegenüberliegt, zum Anschluss der Wickelwelle des Wickelelements aufweist. Die das Wickelelement bildende Plane kann insbesondere eine seitlich verschiebbare Seitenplane eines Lastkraftwagens oder eines Anhängers sein, um eine Ladefläche des Lastkraftwagens oder Anhängers vor äußeren Einflüssen zu schützen. Die Wickelwelle ist üblicherweise aus einer Aluminiumlegierung hergestellt und weist eine Länge auf, die im Wesentlichen der Höhe des Ladeflächenaufbaus des Lastkraftwagens beziehungsweise Anhängers entspricht. Die Wickelwelle selbst ist rund ausgebildet und weist eine sich von außen nach innen erstreckende runde Ausnehmung mit einem sich in Längsrichtung erstreckenden Längsschlitz auf. Die Ausnehmung und der Längsschlitz erstrecken sich vorzugsweise über die gesamte Länge der Wickelwelle. Die Ausnehmung der Wickelwelle ist so gestaltet, dass die Plane darin eingezogen werden kann. Zu diesem Zweck ist ein Keder vorgesehen, der vorzugsweise einen runden Querschnitt aufweist und an dem ein seitliches Ende der Plane befestigt ist. Der Keder kann insbesondere von dem seitlichen Ende der Plane umnäht sein und ist so ausgebildet, dass er in die runde Ausnehmung der Wickelwelle eingesetzt werden kann und die Plane seitlich aus dem Längsschlitz der Wickelwelle herausgeführt werden kann.

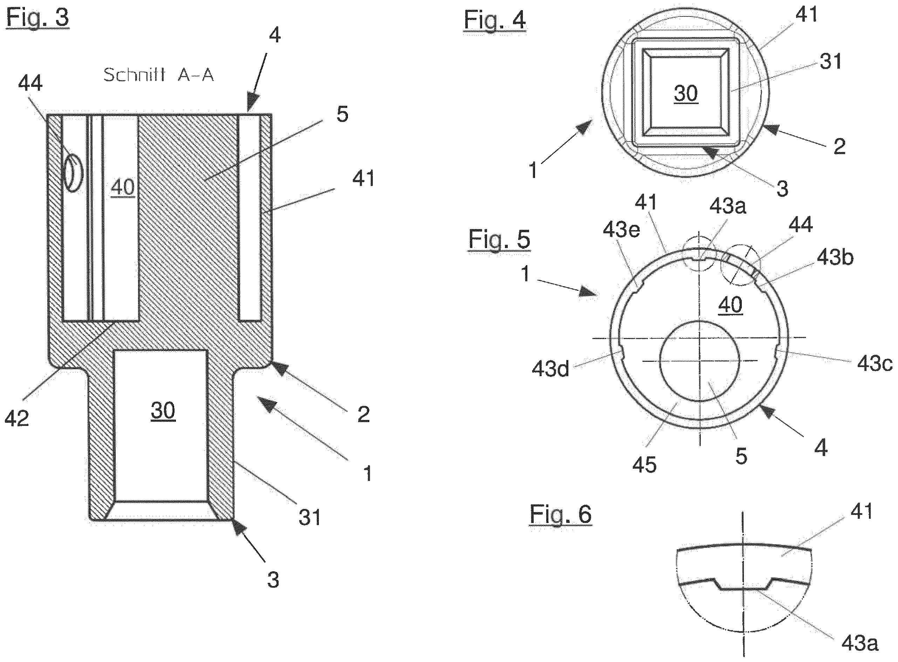

Die Spannvorrichtung, die zum Beispiel eine Spannratsche, eine Spannkurbel oder dergleichen sein kann, umfasst ein Eingriffselement, welches insbesondere als Außenvierkant mit einem rechteckigen Querschnitt ausgebildet sein kann. Der erste Anschlussabschnitt 3, dessen Einzelheiten insbesondere in Fig. 4 zu erkennen sind, bildet einen von einer umlaufenden Wandung 31 seitlich begrenzten Hohlraum 30 mit einem rechteckigen, einen Innenvierkant bildenden Querschnitt, so dass das als Außenvierkant ausgebildete Eingriffselement der Spannvorrichtung passend in den ersten Anschlussabschnitt 3 eingesteckt werden kann. Es soll an dieser Stelle angemerkt werden, dass das Eingriffselement der Spannvorrichtung nicht zwingend als Außenvierkant ausgebildet sein muss, sondern auch andere Formgestaltungen aufweisen kann. Die Form des ersten Anschlussabschnitts 3 kann dementsprechend an die Form des Eingriffselements der Spannvorrichtung angepasst werden und zum Beispiel als Innensechskant oder Schlitzaufnahme ausgebildet sein.

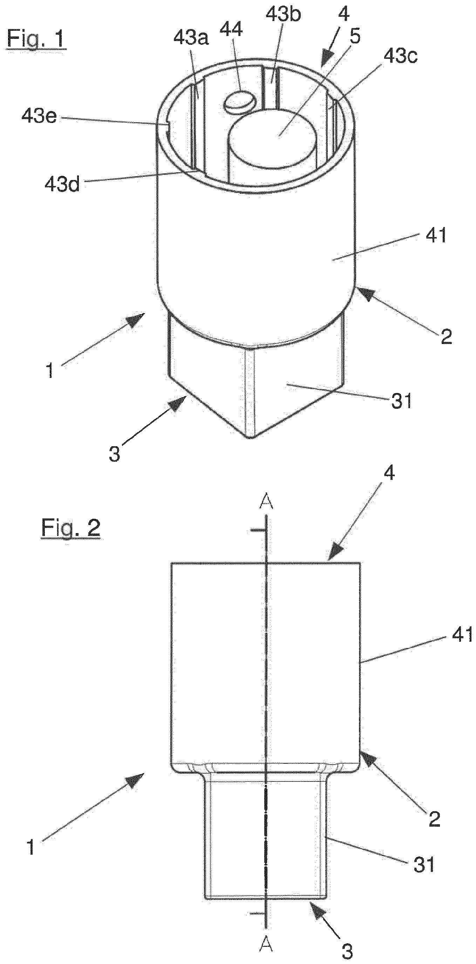

Der zweite Anschlussabschnitt 4 des Anschlussadapters 1, der die Verbindung mit der Wickelwelle bereitstellt, umfasst einen Hohlraum 40, der von einer umlaufenden Wandung 41 seitlich begrenzt ist und einen kreisrunden Querschnitt aufweist. Ferner weist der zweite Anschlussabschnitt 4 ein zylindrisch geformtes Eingriffselement 5 auf, das innerhalb des Hohlraums 40 des zweiten Anschlussabschnitts 4 ausgebildet ist. Wie in Fig. 1, 3 und 5 zu erkennen, ist das zylindrische Eingriffselement 5, das einen kreisrunden Querschnitt aufweist, exzentrisch innerhalb des Hohlraums 40 des zweiten Anschlussabschnitts 4 angeordnet und somit von der Mitte nach außen in Richtung der Wandung 41 versetzt. Zwischen dem Eingriffselement 5 und einer Innenseite der Wandung 41 ist ein Luftspalt 45 ausgebildet. Das bedeutet, dass das Eingriffselement 5 keinerlei mechanische Verbindung (etwa durch einen Verbindungssteg oder dergleichen) mit der Innenseite der Wandung 41 des Hohlraums 40 des zweiten Anschlussabschnitts 4 aufweist. Insbesondere in Fig. 3 ist zu erkennen, dass sich das Eingriffselement 5 von einem Hohlraumgrund 42 des Hohlraums 40 des zweiten Anschlussabschnitts 4 über die gesamte Höhe des Hohlraums 40 erstreckt.

Die Querschnittsform des zweiten Anschlussabschnitts 4, die durch den Querschnitt des Hohlraums 40 und den Querschnitt des darin ausgebildeten exzentrischen Eingriffselements 5 definiert ist, ist so gewählt, dass ein freies Ende der Wickelwelle passend in den Hohlraum 40 eingesetzt werden kann. Wie oben bereits erläutert, weist die Wickelwelle eine sich von außen nach innen erstreckende runde Ausnehmung mit einem Längsschlitz auf. Der Durchmesser des zylindrischen Eingriffselements 5 ist so gewählt, dass das Eingriffselement 5 bei der Montage formschlüssig in die runde Ausnehmung der Wickelwelle eingreifen kann.

Der Anschlussadapter 1 ist einstückig ausgeführt, so dass das Eingriffselement 5 integral mit dem Grundkörper 2 ausgebildet ist. Um Verformungen des Eingriffselements 5 mit der darauf aufgesteckten Wickelwelle während des (insbesondere horizontalen) Spannens beziehungsweise Entspannens der Plane zu verhindern, ist es zweckmäßig, dass das Eingriffselement 5 aus einem Vollmaterial hergestellt ist.

Der Anschlussadapter 1 ermöglicht somit einen drehfesten Anschluss der Spannvorrichtung an die Wickelwelle und verbindet diese derart miteinander, dass ein Drehmoment der Spannvorrichtung auf die Wickelwelle übertragen werden kann, so dass die Plane auf- beziehungsweise abgewickelt werden kann.

Um einen sicheren, drehfesten Halt der Wickelwelle innerhalb des Hohlraums 40 des zweiten Anschlussabschnitts 4 zu erreichen, der insbesondere auch hohen Torsionsbelastungen standhält, kann der Anschlussadapter 1 bei der Montage mit der Wickelwelle, insbesondere hydraulisch, verpresst werden, um dadurch einen wirksamen Form- und Kraftschluss zu erreichen. Um dabei den Kraftschluss zwischen der Wickelwelle und dem Anschlussadapter 1 zu verbessern, weist der zweite Anschlussabschnitt 4 an einer Innenseite der Wandung 41 mehrere, in Umfangsrichtung verteilt angeordnete Halterippen 43a-43e auf, die sich in Längsrichtung über die gesamte Höhe des Hohlraums 40 bis zum Hohlraumgrund 42 des zweiten Anschlussabschnitts 4 erstrecken.

Der Anschlussadapter 1 und die Wickelwelle, die bei der Herstellung insbesondere hydraulisch miteinander verpresst werden können, können als herstellerseitig vormontierte Einheit in den Verkehr gebracht werden. Der Anschlussadapter 1 kann aber auch als Einzelteil veräußert werden, so dass er vom Kunden mit der zugehörigen Wickelwelle verbunden werden muss. Da nicht jeder Kunde die technischen Möglichkeiten hat, um den Anschlussadapter 1 - vorzugsweise hydraulisch - optimal mit der zugehörigen Wickelwelle zu verpressen, ist in der umlaufenden Wandung 41 des Hohlraums 40 des zweiten Anschlussabschnitts 4 zumindest eine Bohrung 44 ausgebildet, in die ein Sicherungsniet zur Sicherung der Wickelwelle innerhalb des Hohlraums 40 einsetzbar ist. Die Bohrung 44 wurde in Fig. 5 durch einen Ausbruch veranschaulicht. Mittels des Sicherungsniets wird somit eine zusätzliche Möglichkeit geschaffen, um die Wickelwelle nach dem Einsetzen in den Hohlraum 40 des zweiten Anschlussabschnitts 4 zu sichern. Eine derartige Nietverbindung schafft ebenfalls eine sichere, drehfeste Verbindung der Wickelwelle mit dem zweiten Anschlussabschnitt 4 des Anschlussadapters 1.

Der Anschlussadapter 1 ist vorzugsweise aus einer Aluminiumlegierung hergestellt. Beispielsweise kann es sich bei dieser Legierung um die unter der Bezeichnung EN AW-7075 (Kurzname nach EN: AIZn5,5MgCu) erhältliche, hochfeste Aluminiumlegierung handeln.

Ein Vorteil der Verwendung einer Aluminiumlegierung zur Herstellung des Anschlussadapters 1 besteht in einer deutlich geringeren Masse im Vergleich zu einem aus Edelstahl hergestellten Anschlussadapter. Die zur Herstellung des Anschlussadapters 1 verwendbaren Aluminiumlegierungen weisen typischerweise eine Dichte im Bereich von etwa 2,8 g/cm³ auf, wohingegen Edelstahl eine Dichte von etwa 8,0 g/cm³ besitzt. Zudem sind Aluminiumlegierungen preisgünstiger als Edelstahl, so dass die Kosten für die Herstellung des Anschlussadapters 1 verringert werden können. Zu dieser Kostenreduktion trägt ebenfalls die Materialersparnis durch den Verzicht auf einen Verbindungssteg zwischen dem Eingriffselement 5 und der Innenseite der Wandung 41 des zweiten Anschlussabschnitts 4 bei.

Vorzugsweise wird der einstückige Anschlussadapter 1 durch Gesenkschmieden und somit in einem Warmumformungsprozess unter hohem Druck aus der Aluminiumlegierung hergestellt. Das Gesenkschmieden bietet den Vorteil, dass ein sehr homogenes Materialgefüge innerhalb des Anschlussadapters 1 erreicht werden kann. Lunkerbildungen, wie sie häufig bei Gussteilen auftreten, können auf diese Weise ausgeschlossen werden. Dadurch ergibt sich auch bei hohen mechanischen Belastungen, insbesondere Torsionsbelastungen, eine wesentlich geringere Bruchneigung des Anschlussadapters 1.

Um die mechanischen Eigenschaften, insbesondere die mechanische Festigkeit, weiter zu erhöhen, wird der aus der Aluminiumlegierung hergestellte Anschlussadapter 1 nach dem Gesenkschmieden vorzugsweise einer thermischen Behandlung ausgesetzt und dadurch zusätzlich gehärtet. Insbesondere kann der Anschlussadapter 1 zu diesem Zweck einer so genannten T6-Wärmebehandlung unterzogen werden, die aus folgenden Schritten besteht: Lösungsglühen mit anschließendem Abschrecken und nachfolgendem Warmauslagern zur Ausscheidungshärtung. Es hat sich gezeigt, dass der Anschlussadapter 1 trotz des auf den Warmumformungsprozess folgenden Härtungsprozesses anschließend noch sehr gut mechanisch bearbeitet werden kann. So ist es zum Beispiel möglich, im Nachhinein die mindestens eine Bohrung 44 zur Aufnahme des Sicherungsniets in die umlaufende Wandung 41 des Hohlraums 40 des ersten Anschlussabschnitts 4 einzubringen. Dieses ist bei Anschlussadaptern, die aus Edelstahl hergestellt sind, erheblich schwieriger. Die Verpressung des aus der Aluminiumlegierung hergestellten Anschlussadapters 1 mit der aus einer Aluminiumlegierung hergestellten Wickelwelle (alternativ zur Vernietung) ist ebenfalls leichter möglich.

## Patentansprüche

1. Anschlussadapter (1) zum Anschluss einer Spannvorrichtung an eine Wickelwelle eines Wickelelements, insbesondere einer Plane, umfassend einen Grundkörper (2), der einen ersten Anschlussabschnitt (3), der zum Anschluss an ein Eingriffselement der Spannvorrichtung eingerichtet ist, und einen zweiten Anschlussabschnitt (4), der dem ersten Anschlussabschnitt (3) gegenüberliegt und zum Anschluss an die Wickelwelle eingerichtet ist, aufweist, wobei der zweite Anschlussabschnitt (4) einen von einer umlaufenden Wandung (41) seitlich begrenzten Hohlraum (40) mit einem Hohlraumgrund (42) aufweist, in welchen Hohlraum (40) ein Ende der Wickelwelle einsteckbar ist und innerhalb dessen ein Eingriffselement (5) integral mit dem Grundkörper (2) ausgebildet ist, das so geformt ist, dass es formschlüssig in eine sich von außen nach innen erstreckende, insbesondere einen Längsschlitz umfassende, runde Ausnehmung der Wickelwelle eingreifen kann, wobei das Eingriffselement (5) exzentrisch innerhalb des Hohlraums (40) des zweiten Anschlussabschnitts (4) angeordnet ist und sich vom Hohlraumgrund vorzugsweise im Wesentlichen über die gesamte Höhe des Hohlraums (40) erstreckt, **dadurch gekennzeichnet, dass** das Eingriffselement (5)
- zylinderförmig ausgebildet und
- durch einen Luftspalt (45) von der umlaufenden Wandung (41) des Hohlraums (40) beabstandet angeordnet ist.

2. Anschlussadapter (1) nach Anspruch 1, **dadurch gekennzeichnet, dass** an einer Innenseite der Wandung (41) des Hohlraums (40) des zweiten Anschlussabschnitts (4) zumindest eine Halterippe (43a-43e) ausgebildet ist, die sich in Längsrichtung des Hohlraums (40) erstreckt und mit der Wickelwelle verpressbar ist.

3. Anschlussadapter (1) nach Anspruch 2, **dadurch gekennzeichnet, dass** sich die Halterippe (43a-43e) in Längsrichtung über die gesamte Höhe des Hohlraums (40) bis zum Hohlraumgrund (42) des zweiten Anschlussabschnitts (4) erstreckt.

4. Anschlussadapter (1) nach einem der Ansprüche 2 oder 3, **dadurch gekennzeichnet, dass** an einer Innenseite der Wandung (41) des Hohlraums (40) des zweiten Anschlussabschnitts (4) mehrere, in Umfangsrichtung voneinander beabstandete Halterippen (43a-43e) ausgebildet sind, die sich in Längsrichtung des Hohlraums (40) erstrecken und mit der Wickelwelle verpressbar sind.

5. Anschlussadapter (1) nach Anspruch 4, **dadurch gekennzeichnet, dass** sich die Halterippen (43a-43e) in Längsrichtung über die gesamte Höhe des Hohlraums (40) bis zum Hohlraumgrund (42) des zweiten Anschlussabschnitts (4) erstrecken.

6. Anschlussadapter (1) nach einem der Ansprüche 1 bis 5, **dadurch gekennzeichnet, dass** in der Wandung (41) des Hohlraums (40) des zweiten Anschlussabschnitts (4) zumindest eine Bohrung (44) ausgebildet ist, in die ein Sicherungsniet zur Sicherung der Wickelwelle innerhalb des Hohlraums (40) einsetzbar ist.

7. Anschlussadapter (1) nach einem der Ansprüche 1 bis 6, **dadurch gekennzeichnet, dass** der Anschlussadapter (1) aus einer Aluminiumlegierung hergestellt ist.

8. Anschlussadapter (1) nach einem der Ansprüche 1 bis 7, **dadurch gekennzeichnet, dass** der Anschlussadapter (1) durch einen Hochdruck-Warmumformungsprozess hergestellt ist.

9. Anschlussadapter (1) nach Anspruch 8, **dadurch gekennzeichnet, dass** der Anschlussadapter (1) durch Gesenkschmieden hergestellt ist.

10. Anschlussadapter (1) nach einem der Ansprüche 1 bis 9, **dadurch gekennzeichnet, dass** der Anschlussadapter (1) durch thermische Behandlung gehärtet ist.

11. Anordnung, umfassend eine Wickelwelle eines Wickelelements, insbesondere einer Plane, und einen Anschlussadapter (1) zum Anschluss einer Spannvorrichtung an die Wickelwelle, wobei der Anschlussadapter (1) mit der Wickelwelle verbunden ist, **dadurch gekennzeichnet, dass** der Anschlussadapter (1) nach einem der Ansprüche 1 bis 10 ausgeführt ist.

## Claims

1. Adapter (1) to connect a tensioning device to a winding shaft of a winding element, especially to one of a tarpaulin, comprising a base body (2), which has a first connecting section (3), which is arranged for the connection to an engaging element of the tensioning device and a second connecting section (4), which is opposite the first connecting section (3) and is adapted for the connection to the winding shaft, wherein the second connecting section (4) has a cavity (40) laterally delimited by a circumferential wall (41), with a cavity bottom (42), in which cavity (40) an end of the winding shaft can be inserted and within which an engaging element (5) is integrally formed with the base body (2), which is formed in such a manner that it can form-fittingly engage in a round recess of the winding shaft extending from the outside to the inside and particularly comprising a longitudinal slot, wherein the engaging element (5) is eccentrically arranged inside the cavity (40) of the second connecting section (4) and extends from the cavity bottom preferably substantially over the entire height of the cavity (40), **characterised in that** the engaging element (5)
- is cylindrical in shape and
- is arranged at a distance from the circumferential wall (41) of the cavity (40) by an air gap (45).

2. Adapter (1) according to claim 1, **characterised in that** on one inner side of the wall (41) of the cavity (40) of the second connecting section (4) at least one holding rib (43a-43e) is formed, which extends in the longitudinal direction of the cavity (40) and which can be pressed with the winding shaft.

3. Adapter (1) according to claim 2, **characterised in that** the holding rib (43a-43e) extends in the longitudinal direction over the entire height of the cavity (40) to the cavity bottom (42) of the second connecting section (4).

4. Adapter (1) according to one of claims 2 or 3, **characterised in that** on one inner side of the wall (41) of the cavity (40) of the second connecting section (4) several holding ribs (43a-43e), spaced apart from one another in a circumferential direction, are formed, which extend in the longitudinal direction of the cavity (40) and can be pressed with the winding shaft.

5. Adapter (1) according to claim 4, **characterised in that** the holding ribs (43a-43e) extend in the longitudinal direction over the entire height of the cavity (40) to the cavity bottom (42) of the second connecting section (4).

6. Adapter (1) according to one of claims 1 to 5, **characterised in that** in the wall (41) of the cavity (40) of the second connecting section (4) at least one bore (44) is formed, in which a safety rivet for securing the winding shaft inside the cavity (40) can be inserted.

7. Adapter (1) according to one of claims 1 to 6, **characterised in that** the adapter (1) is made of an aluminium alloy.

8. Adapter (1) according to one of claims 1 to 7, **characterised in that** the adapter (1) is produced by a high pressure hot forming process.

9. Adapter (1) according to claim 8, **characterised in that** the adapter (1) is produced by drop forging.

10. Adapter (1) according to one of claims 1 to 9, **characterised in that** the adapter (1) is hardened by thermal treatment.

11. Arrangement comprising a winding shaft of a winding element, particularly of a tarpaulin, and an adapter (1) for connecting a tensioning device to the winding shaft, wherein the adapter (1) is connected to the winding shaft, **characterised in that** the adapter (1) is implemented according to one of claims 1 to 10.

## Revendications

1. Adaptateur (1) pour connecter un dispositif tendeur à un arbre d'enroulement d'un élément à enrouler, d'une bâche notamment, comprenant un corps de base (2) qui présente un premier segment de connexion (3) configuré pour le raccordement à un élément d'engrènement du dispositif tendeur, et comprenant un deuxième segment de connexion (4) situé en face du premier segment de connexion (3) et qui est configuré pour le raccordement à l'arbre d'enroulement,
sachant que le deuxième segment de connexion (4) présente, limitée latéralement par une paroi périphérique (41), une cavité (40) avec un fond (42) de cavité, cavité (40) dans laquelle une extrémité de l'arbre d'enroulement est enfichable et à l'intérieur de laquelle un élément d'engrènement (5) est intégralement configuré avec le corps de base (2), corps qui est formé de manière à pouvoir engrener par adhérence de formes dans un évidement rond de l'arbre d'enroulement s'étendant de l'extérieur vers l'intérieur et comprenant notamment une fente longitudinale,
sachant que l'élément d'engrènement (5) est disposé excentrique à l'intérieur de la cavité (40) du deuxième segment de connexion (4) et qu'il s'étend du fond de la cavité de préférence et essentiellement sur toute la hauteur de la cavité (40),
**caractérisé en ce que** l'élément d'engrènement (5) est configuré cylindrique et qu'il est disposé, du fait d'un interstice (45), à distance de la paroi périphérique (41) de la cavité (40).

2. Adaptateur de connexion (1) selon la revendication 1, **caractérisé en ce que** sur un côté intérieur de la paroi (41) de la cavité (40) du deuxième segment de connexion (4) est configuré au moins une nervure de retenue (43a-43e) qui s'étend dans le sens longitudinal de la cavité (40) et qui est sertissable avec l'arbre d'enroulement.

3. Adaptateur de connexion (1) selon la revendication 2, **caractérisé en ce que** la nervure de retenue (43a-43e) s'étend dans le sens longitudinal sur toute la hauteur de la cavité (40) jusqu'au fond (42) de la cavité du deuxième segment de connexion (4).

4. Adaptateur de connexion (1) selon l'une des revendications 2 ou 3, **caractérisé en ce que** sur un côté intérieur de la paroi (41) de la cavité (40) du deuxième segment de connexion (4) sont configurées plusieurs nervures de retenue (43a-43e) distantes les unes des autres dans le sens périphérique, nervures qui s'étendent dans le sens longitudinal de la cavité (40) et qui sont sertissables avec l'arbre d'enroulement.

5. Adaptateur de connexion (1) selon la revendication 4, **caractérisé en ce que** les nervures de retenue (43a-43e) s'étendent dans le sens longitudinal sur toute la hauteur de la cavité (40), jusqu'au fond (42) de la cavité du deuxième segment de connexion (4).

6. Adaptateur de connexion (1) selon l'une des revendications 1 à 5, **caractérisé en ce que** dans la paroi (41) de la cavité (40) du deuxième segment de connexion (4) est configuré au moins un alésage (44) dans lequel peut être introduit un rivet servant à sécuriser l'arbre d'enroulement à l'intérieur de la cavité (40).

7. Adaptateur de connexion (1) selon l'une des revendications 1 à 6, **caractérisé en ce que** l'adaptateur de connexion (1) est fabriqué dans un alliage d'aluminium.

8. Adaptateur de connexion (1) selon l'une des revendications 1 à 7, **caractérisé en ce que** l'adaptateur de connexion (1) est fabriqué au moyen d'un processus de déformation à chaud sous haute pression.

9. Adaptateur de connexion (1) selon la revendication 8, **caractérisé en ce que** l'adaptateur de connexion (1) est fabriqué par matriçage.

10. Adaptateur de connexion (1) selon l'une des revendications précédentes 1 à 9, **caractérisé en ce que** l'adaptateur de connexion (1) est trempé par traitement thermique.

11. Agencement comprenant un arbre d'enroulement d'un élément à enrouler, notamment d'une bâche, et un adaptateur de connexion (1) servant à raccorder un dispositif tendeur à l'arbre d'enroulement, sachant que l'adaptateur de connexion (1) est relié à l'arbre d'enroulement, **caractérisé en ce que** l'adaptateur de connexion (1) est réalisé selon l'une des revendications 1 à 10.
